# EUROPÄISCHE PATENTSCHRIFT

(11) **EP 1 625 961 B1**
(45) Veröffentlichungstag und Bekanntmachung des Hinweises auf die Patenterteilung: **03.09.2008**
(21) Anmeldenummer: 05014244.7
(22) Anmeldetag: 30.06.2005
(51) Int. Cl.: B60J 7/185

(54) **Lageranordnung für ein Rollenelement**
Bearing assembly for a roller element
Dispositif de palier pour un élément de roulement

(30) Priorität: 12.08.2004 DE 102004039150
(43) Veröffentlichungstag der Anmeldung: 15.02.2006
(73) Patentinhaber: Wilhelm Karmann GmbH, 49084 Osnabrück (DE)
(72) Erfinder: Bols, Hauke, 49082 Osnabrück (DE)

(56) Entgegenhaltungen:
- WO-A-98/43835
- DE-A1- 19 514 278
- DE-A1- 19 847 842
- DE-A1- 19 935 739
- DE-U1- 29 703 774

## Beschreibung

Die vorliegende Erfindung betrifft eine Lageranordnung für zumindest ein Rollenelement, insbesondere für ein Verschlussgegenelement einer Verschlussvorrichtung zum Verschließen eines Verdecks eines Cabriolet-Kraftfahrzeuges an einem Karosserierahmenelement, nach der im Oberbegriff des Patentanspruches 1 näher bezeichneten Art.

Eine derartige Lageranordnung ist aus dem Stand der Technik hinreichend bekannt. Beispielsweise aus der DE 297 03 774 U1 ist eine Verschlussvorrichtung für ein an einem Karosserierahmenelement lösbar festlegbares Cabriolet-Verdeck eines Kraftfahrzeuges bekannt.

Die offenbarte Verschlussvorrichtung weist ein Verschlusselement zur Verbindung des Cabriolet-Verdeckes mit dem Karosserierahmenelement auf, wobei das Verschlusselement zumindest ein bewegbares Riegelorgan umfasst, das ein als Widerlager vorgesehenes Verschlussgegenelement zumindest bereichsweise umgreift, um das Verdeck in einer Schließstellung zu halten.

Dabei ist das Verschlussgegenelement als parallel zur Fahrzeuglängsachse verlaufender, von einer drehbaren Hülse quasi als Rollenelement umgriffener Rundsteg ausgebildet, der von dem Riegelorgan, welches schwenkbar ist, in Schließstellung umgriffen wird. Der Rundsteg mit der drehbaren Hülse ist in dem Widerlagerträger bzw. in einem Verschlussunterteil an dem Karoserierahmenteil gehalten.

Aufgrund der vorliegenden Fertigungstoleranzen bei der Fertigung des Widerlagerträgers mit der drehbaren Hülse ist ein Axialspiel gegeben, welches zu unerwünschten Geräuschen zwischen der Hülse und dem Rundsteg bzw. den Wänden des Widerlagerträgers führen kann.

Ferner ist aus der DE 199 35 739 A1 ein Schlossteil zum lösbaren Verbinden eines Fahrzeugdaches mit einem Karosseriebauteil offenbart. Das Schlossteil weist eine Sperrvorrichtung zur Aufnahme eines Verschlusshakens auf, wobei das Schlossteil eine drehbare Rolle umfasst, die auf einem Zylinderstift drehbar gelagert ist. Relativbewegungen des Verschlusshakens in der Schließlage werden somit durch die Drehbewegung der Rolle erleichtert. Auch bei dieser Art der Lagerung ergibt sich das eingangs genannte Problem bezüglich der unerwünschten Geräuschentwicklung.

Schließlich zeigt die Druckschrift DE 39 29 527 A1 einen Verschluss für ein Faltdach eines Fahrzeuges. Der bekannte Verschluss besteht aus einem Schließhebel mit einem Fangbolzen zum Erfassen eines Hakens und einer Einrichtung zum Zurückziehen des Schließhebels in seine Schließlage, wobei der Schließhebel um einen ortsfesten Hauptbolzen schwenkbar ist, und wobei die Einrichtung zum Zurückziehen aus einem flexiblen Zugglied und einer Spanneinrichtung besteht und das Zugglied an dem Fangbolzen befestigt ist. Bei dem bekannten Verschluss weist der Fangbolzen kein Rollenelement auf.

Außerhalb des Gebiets der Cabriolet-Verdecke ist eine Lageranordnung nach der einleitend genannten Art aus der WO 98/43835 A bekannt.

Weitere Beispiele für Lageranordnungen, bei denen ein Rollenelement auf einem Achsenelement zwischen zwei Halteelementen drehbar gelagert ist, sind in der DE 195 14 278 A1 und der DE 198 47 842 A1 offenbart.

Der vorliegenden Erfindung liegt die Aufgabe zugrunde, eine Lageranordnung der eingangs genannten Art zu schaffen, welche einerseits eine möglichst konstruktiv einfache Lagerung eines Rollenelementes realisiert und zudem vorgegebene Toleranzmaße bezüglich der Rollenelementlagerung gewährleistet.

Diese Aufgabe wird erfindungsgemäß durch eine Lageranordnung gemäß den Merkmalen des Patentanspruches 1 gelöst.

Demnach wird eine Lageranordnung für zumindest ein Rollenelement, insbesondere für zumindest ein Verschlussgegenelement oder dergleichen einer Verschlussvorrichtung zum Verschließen eines Verdecks eines Cabriolet-Kraftfahrzeuges an einem Karosserierahmenelement, bei der das Rollenelement auf einem Achsenelement zwischen zumindest zwei Halteelementen drehbar gelagert ist, erfindungsgemäß derart ausgeführt, dass das Achsenelement axial definiert an den Halteelementen gelagert ist und zumindest eine erste Anlageschulter zur Anlage eines Endes des Rollenelementes in axialer Richtung zwischen den Halteelementen aufweist, wobei eine Länge zwischen der ersten Anlageschulter und einem gegenüberliegenden Halteelement im Wesentlichen der Länge des Rollelementes entspricht.

Mit der erfindungsgemäßen Lageranordnung ist es möglich, unabhängig von eventuell bei den Halteelementen auftretenden Fertigungstoleranzen geforderte axiale oder auch radiale Toleranzen allein durch die Vorgabe der Abmessungen und die daraus resultierende Ausbildung der Anlageschulter an dem Achsenelement einzuhalten.

Auf diese Weise kann das Rollenelement auf der Achse derart gelagert werden, dass unerwünschte Geräuschentwicklungen im Betrieb sicher vermieden werden. Dies ist insbesondere vorteilhaft bei einer Verschlussvorrichtung zum manuellen oder auch automatischen oder halbautomatischen Verschließen eines Verdecks, da in diesem Bereich ein klapperndes Rollenelement sowohl im geschlossenen als auch im offenen Zustand des Verdecks als sehr störend empfunden wird.

Bei einer einfachen Ausführung unterteilt die vorgesehene Anlageschulter bei der vorliegenden Erfindung das Achsenelement zumindest in einen ersten Durchmesserabschnitt und einen zweiten Durchmesserabschnitt, wobei der Durchmesser des ersten Durchmesserabschnittes größer als der Durchmesser des zweiten Durchmesserabschnittes ist. Die einzelnen Durchmesserabschnitte können vorzugsweise jeweils für sich gleich bleibende bzw. konstante Durchmesserverläufe in axialer Richtung aufweisen. Es ist auch möglich, dass in axialer Richtung der jeweiligen Durchmesserabschnitte Durchmesserveränderungen auftreten.

Besonders vorteilhaft ist es, wenn die Länge des zweiten Durchmesserabschnittes in axialer Richtung geringfügig größer als die Länge des Rollenelementes ist. Somit kann das Rollenelement mit einem geforderten Toleranzmaß drehbar an dem zweiten Durchmesserabschnitt des Achsenelements gelagert werden, wobei durch die axiale Länge des zweiten Durchmesserabschnittes das axiale Spiel des Rollenelementes auf einfachste Weise festgelegt werden kann, so dass eine optimale Lagerung des Rollenelementes auf dem Achsenelement realisiert wird, ohne dass ein zu großes Spiel zwischen den Halteelementen und dem Rollenelement auftreten kann.

Im Rahmen einer vorteilhaften Ausführungsform der vorliegenden Erfindung kann es vorgesehen sein, dass das Achsenelement im Bereich seines ersten Durchmesserabschnitts an dem ersten Halteelement gelagert ist.

Die Lagerung des ersten Durchmesserabschnitts an dem ersten Halteelement kann z. B. als Presspassung ausgebildet sein. Eine andere Möglichkeit sieht als Verbindung zwischen dem ersten Durchmesserabschnitt und dem ersten Halteelement eine Lagerung mit einem vorbestimmten radialen Spiel vor, so dass das Achsenelement leicht drehbar gehalten ist.

Bei einer bevorzugten Ausgestaltung der vorliegenden Erfindung ist neben der ersten Anlageschulter eine zweite Anlageschulter zur Anlage an dem zweiten Halteelement vorgesehen, welche zweckmäßigerweise an dem dem ersten Durchmesserabschnitt abgewandten Ende des zweiten Durchmesserabschnittes vorgesehen sein kann.

Wenn die Länge zwischen der ersten und der zweiten Anlageschulter im Wesentlichen der Länge des Rollenelementes entspricht, wird ein mit Klappergeräuschen verbundenes Rutschen des auf dem Achsenelement einerseits durch die erste Anlageschulter und andererseits durch das Anliegen der zweiten Anlageschulter an dem zweiten Halteelement festgelegten Rollenelements in axialer Richtung verhindert.

Prinzipiell können die Anlageschultern sowohl durch Absätze des Achsenelementes als auch durch separate auf dem Achsenelement axial festgelegte Bauelemente gebildet sein, wobei sich erstere Lösung durch einen geringeren Aufwand und eine höhere Toleranzgenauigkeit auszeichnet.

Demgemäß kann in einer vorteilhaften Ausführung die zweite Anlageschulter einen Übergang zwischen dem zweiten Durchmesserabschnitt und einem sich anschließenden dritten Durchmesserabschnitt mit einem kleineren Durchmesser als der zweite Durchmesserabschnitt bilden.

Zweckmäßigerweise kann das Achsenelement im Bereich seines dritten Durchmesserabschnitts an dem zweiten Halteelement gelagert sein.

Gemäß der vorliegenden Erfindung kann jedes geeignete Bauteil als Achsenelement verwendet werden. Nach einer bevorzugten Ausführungsform ist das Achsenelement ein Nietschaft eines Niets, dessen Nietkopf an der dem Rollenelement abgewandten Seite des zugeordneten Halteelements ausgebildet ist

Vorzugsweise kann ein solcher Niet aus einem metallischen Werkstoff bzw. aus einer metallischen Werkstoffverbindung gefertigt sein. Es sind jedoch auch andere Werkstoffe für den Bolzen verwendbar. Auch bei dem Rollenelement ist die Werkstoffwahl nicht auf einen bestimmten Werkstoff beschränkt. Bevorzugt kann jedoch Kunststoff verwendet werden.

Die Halteelemente können gemäß einer besonders vorteilhaften Weiterbildung der vorliegenden Erfindung als Trägerbleche ausgebildet sein, welche als an einem Karosserierahmenelement befestigte Bestandteile einer Verschlussvorrichtung eines Verdecks ausgebildet sind. Die Trägerbleche können dabei in üblicher Weise mittels Blechstanzung hergestellt sein.

Zwischen den Trägerblechen ist dann das ein Verschlussgegenelement darstellende Rollenelement gelagert. Folglich kann bei der Verschlussvorrichtung das Rollenelement von einem als Fanghaken ausgebildeten Verschlusselement zumindest teilweise umgriffen werden, um eine sichere Schließlage des Verdecks zu ermöglichen.

Weitere Vorteile und vorteilhafte Ausgestaltungen des Gegenstandes nach der Erfindung sind der Beschreibung, der Zeichnung und den Patentansprüchen entnehmbar.

Ein Ausführungsbeispiel einer Lageranordnung nach der Erfindung an einer Verschlussvorrichtung eines Verdecks eines Cabriolet-Kraftfahrzeuges ist in der Zeichnung schematisch vereinfacht dargestellt und wird in der nachfolgenden Beschreibung näher erläutert.

Es zeigt:
- Fig.1: einen Ausschnitt eines Verdecks eines Cabriolet-Kraftfahrzeuges mit einer vereinfacht gezeigten Verschlussvorrichtung in einer schematischen, dreidimensionalen Darstellung; und
- Fig. 2: eine Lageranordnung für ein Rollenelement, welches als ein Verschlussgegenelement der Verschlussvorrichtung der Fig. 1 ausgebildet ist.

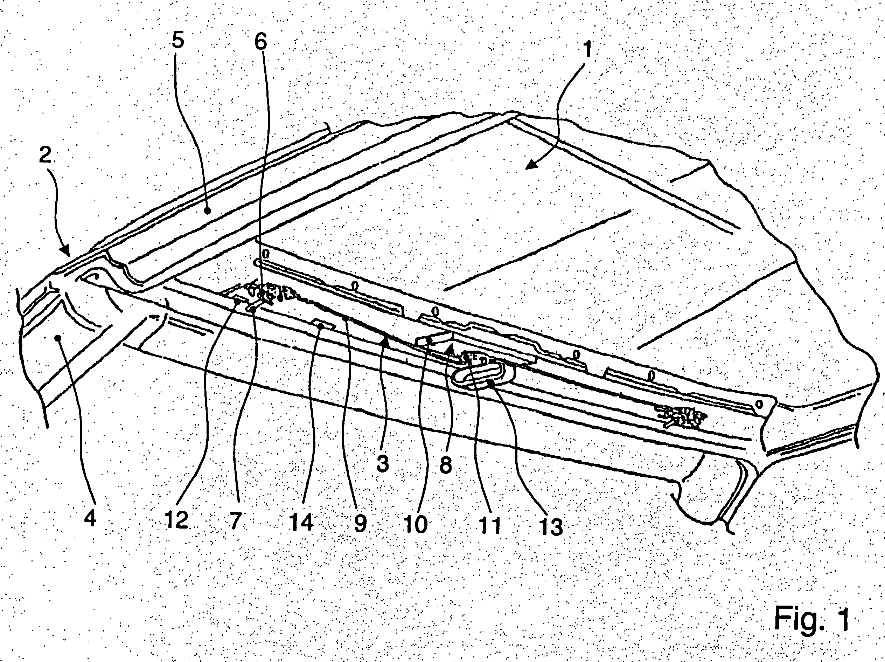

Bezug nehmend auf die Fig. 1 der Zeichnung ist ein Verdeck 1 eines nur ausschnittsweise angedeuteten Cabriolet-Kraftfahrzeuges 2 in einem geschlossenen Zustand gezeigt, wobei das Verdeck 1 mittels einer Verschlussvorrichtung 3 an einem hier einen Windschutzscheibenrahmen darstellenden Karosserierahmenelement 4 festgelegt ist.

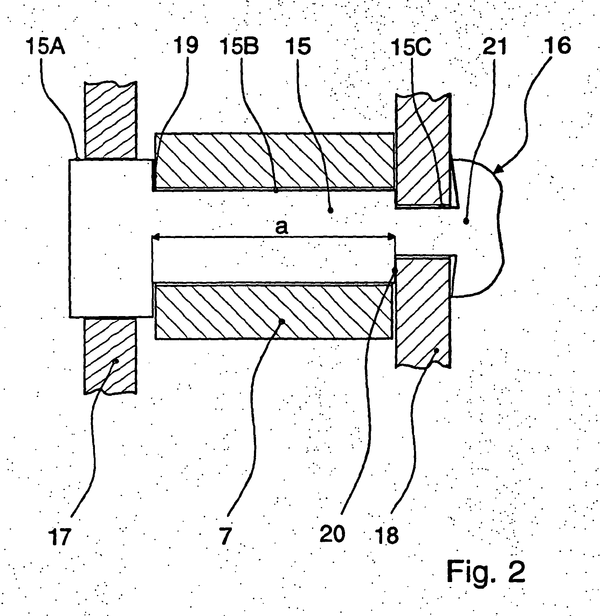

Dabei weist die Verschlussvorrichtung 3 zwei an einer Dachspitze bzw. Verdeckvorderkante 5 seitlich symmetrisch bezüglich einer Fahrzeugmittellängsachse angeordnete Verschlusselemente 6 auf, die mit nur prinzipmäßig in der Figur angedeuteten, in der Praxis hinter einer Verkleidung liegenden und in Fig. 2 näher gezeigten Verschlussgegenelementen 7 an dem Windschutzscheibenrahmen 4 in Eingriff bringbar sind, um das Verdeck an dem Windschutzscheibenrahmen 4 festzulegen.

Weiterhin weist die Verschlussvorrichtung 3 eine zentral zwischen den Verschlusselementen 6 angeordnete Antriebseinheit 8 auf, welche vorliegend zum Antrieb der Verschlusselemente 6 vorgesehen ist. Die Antriebseinheit 8 wird vorzugsweise elektrisch oder elektronisch gesteuert.

Es versteht sich, dass in einer anderen Ausführungsvariante auch ein manueller Antrieb der Verschlusselemente vorgesehen sein kann.

Zwischen der Antriebseinheit 8 und den Verschlusselementen 6 sind jeweils Verbindungselemente 9 vorgesehen, um die Antriebsverbindung zwischen den Verschlusselementen 6 und der Antriebseinheit 8 durch eine mechanische Kopplung zu erreichen. Die Verbindungselemente 9 sind vorliegend je als gelenkig gelagerte Verbindungsstange ausgebildet, jedoch können diese in weiteren Ausführungen auch als Seilzüge oder ähnliches ausgebildet sein.

Im gezeigten Ausführungsbeispiel ist die Antriebseinheit 8 mit einem Elektromotor 10 ausgebildet, jedoch kann die Antriebseinheit alternativ z. B. auch als hydraulische Einheit ausgebildet sein. Einer Motorabtriebswelle des Elektromotors 10 ist ein Getriebe 11 nachgeordnet, welches eine Drehbewegung der Abtriebswelle in eine Axialbewegung der Verbindungselemente 9 transformiert.

Die Verschlusselemente 6 stellen mit den Verbindungselementen bzw. Verbindungsstangen 9 wirkverbundene, hakenartige Riegelelemente dar, welche bei Verdrehung bzw. Verkippung in einer Fangstellung des Verdecks 1 mit den Verschlussgegenelementen 7, die hier als Rollenelemente auf einem karosseriefesten Achsenelement ausgebildet sind, in Eingriff bringbar sind.

Die Steuereinheit der Antriebseinheit 8 ist mit einem Sensor 12 signalverbunden, welcher detektiert, ob das Cabriolet-Verdeck 1 eine vorgebbare Stellung eingenommen hat, welche als Fangstellung definiert ist. Wird das Erreichen der Fangstellung durch das Verdeck detektiert, wird dies durch den Sensor 12 erfasst und von der Steuereinheit verarbeitet. Die Steuereinheit steuert daraufhin die Antriebseinheit 8 an, um die Verschlusselemente 6 mit den Verschlussgegenelementen 7 in Eingriff zu bringen und das Verdeck 1 an dem Windschutzscheibenrahmen 4 festzulegen.

Soll das Verdeck 1 geschlossen und festgelegt werden, wird das Verdeck 1 aus einer Vorschließstellung, in der die Verdeckvorderkante 5 mit einem vorgebbaren Abstand gegenüber der rückwärtigen Kante des Windschutzscheibenrahmens 4 angehoben ist, mit der Dachspitze 5 manuell z. B. unter Überwindung eines Totpunktes an den Windschutzscheibenrahmen 4 geführt, bis die Fangstellung eingenommen ist. Das Erreichen der Fangstellung detektiert der mit der Steuereinheit der Antriebseinheit 8 in Signalverbindung stehende Sensor 12, woraufhin die Steuereinheit die Antriebseinheit 8 ansteuert, um die Verschlusselemente 6 zum Verriegeln zu betätigen. Das Verdeck 1 wird dadurch festgelegt.

Zum manuellen Schließen des Verdecks 1 in der Fangstellung weist das Verdeck 1 ein Griffelement 13 auf, das hier als Handgriff ausgebildet ist und in einfachster Ausführung auch als Griffschale ausgebildet sein kann.

Zur Entriegelung des Verdecks 1 umfasst die Verschlussvorrichtung 1 ein Betätigungselement 14. Dieses Betätigungselement 14 ist vorliegend als Druckschalter ausgebildet und steht ebenfalls mit der Steuereinheit der Antriebseinheit 8 in Signalverbindung. Bei einer Betätigung des Betätigungselements 14 werden die Verschlusselemente 6 mit den Verschlussgegenelementen 7 außer Eingriff gebracht.

Die Fig. 2 zeigt eine erfindungsgemäße Lageranordnung für ein Rollenelement bzw. Verschlussgegenelement 7 der Verschlussvorrichtung 3 in einem vereinfachten Längsschnitt.

Das Rollenelement 7 ist auf einem Nietschaft 15 eines Niets 16 zwischen zwei Halteelementen 17, 18, welche mit dem Windschutzscheibenrahmen 4 fest verbundene Trägerbleche darstellen, drehbar gelagert.

Dabei weist der ein Achsenelement darstellende Nietschaft 15 eine erste Anlageschulter 19 auf, welche zwischen den Halteelementen 17, 18 als Absatz des Nietschafts 15 ausgebildet ist. Ein Ende des Rollenelementes 7 liegt dabei unmittelbar an der Anlageschulter 19 an.

Durch die erste Anlageschulter 19 wird der Nietschaft 15 in einen ersten Durchmesserabschnitt 15A und einen zweiten Durchmesserabschnitt 15B unterteilt, wobei der Durchmesser des ersten Durchmesserabschnittes 15A größer als der Durchmesser des zweiten Durchmesserabschnittes 15B ausgebildet ist.

An dem dem ersten Durchmesserabschnitt 15A abgewandten Ende des zweiten Durchmesserabschnittes 15B ist eine zweite, wiederum als Absatz des Nietschafts 15 ausgebildete Anlageschulter 20 vorgesehen, so dass sich an den zweiten Durchmesserabschnitt 15B ein dritter Durchmesserabschnitt 15C anschließt.

Durch die axiale Anordnung der jeweiligen Anlageschultern 19, 20 wird eine axiale Länge a des zweiten Durchmesserabschnittes 15B festgelegt, welche als Lagerbereich für das Rollenelement bzw. Verschlussgegenelement 7 dient und auf die Abmessungen des Rollenelementes 7 exakt abgestimmt ist. Zweckmäßigerweise ist die axiale Länge a des zweiten Durchmesserabschnittes 15B geringfügig größer als die axiale Länge des Rollenelementes 7.

Der Niet 16 ist durch entsprechende Aussparungen an den Halteelementen 17, 18 geführt, wobei er mit seinem ersten Durchmesserabschnitt 15A an dem ersten Halteelement 17 vorliegend mittels einer Presspassung festgelegt ist, mit seinem dritten Durchmesserabschnitt 15C geringsten Durchmessers an dem zweiten Halteelement 18 gelagert ist und an der Seite des zweiten Halteelementes 18, welche dem ersten Halteelement 17 abgewandt ist, einen Nietkopf 21 aufweist.

Eine axiale Verschiebung des Niets 16 wird einerseits durch den Nietkopf 21 und andererseits und andererseits durch die ein Gegenlager bildende zweite Anlageschulter 20, welche an dem zweiten Halteelement 18 anliegt, verhindert.

Bei der erfindungsgemäßen Lageranordnung kann die axiale Länge a des Nietschaft 15 im Bereich des zweiten Durchmesserabschnittes 15B durch entsprechende Fertigung der Achsabsätze zum Bilden der Anlageschultern 19, 20 exakt festgelegt werden. Demzufolge kann das Axialspiel des Rollenelementes 7 auf einen vorgegebenen Wert eingestellt werden.

In vorteilhafter Weise können dabei Fertigungstoleranzen bei der Fertigung der Halteelemente bzw. Trägerbleche 17, 18 ausgeglichen werden, so dass die Abmessungen, welche für die Toleranzen bei der Lagerung des Rollenelementes 7 erheblich sind, allein durch die Fertigung des Nietschafts 15 beeinflusst werden.

### BEZUGSZEICHEN

- 1: Verdeck
- 2: Cabriolet-Kraftfahrzeug
- 3: Verschlussvorrichtung
- 4: Karosserierahmenelement, Windschutzscheibenrahmen
- 5: Dachspitze, Verdeckvorderkante
- 6: Verschlusselement, Riegelelement
- 7: Rollenelement, Verschlussgegenelement
- 8: Antriebseinheit
- 9: Verbindungselement
- 10: Elektromotor
- 11: Getriebe
- 12: Sensor
- 13: Griffelement
- 14: Betätigungselement
- 15: Achsenelement, Nietschaft
- 15A: erster Durchmesserabschnitt des Achsenelements
- 15B: zweiter Durchmesserabschnitt des Achsenelements
- 15C: dritter Durchmesserabschnitt des Achsenelements
- 16: Niet
- 17: erstes Halteelement
- 18: zweites Halteelement
- 19: erste Anlageschulter
- 20: zweite Anlageschulter
- 21: Nietkopf
- a: axiale Länge des Nietschaft

## Patentansprüche

1. Lageranordnung für zumindest ein Rollenelement (7), insbesondere für zumindest ein Verschlussgegenelement einer Verschlussvorrichtung (3) zum Verschließen eines Verdecks (1) eines Cabriolet-Kraftfahrzeuges (2) an einem Karosserierahmenelement (4), wobei das Rollenelement (7) auf einem Achsenelement (15) zwischen zumindest zwei Halteelementen (17, 18) drehbar gelagert ist, und wobei das Achsenelement (15) axial definiert an den Halteelementen (17, 18) gelagert ist und zumindest eine erste Anlageschulter (19) zwischen den Halteelementen (17, 18) zur Anlage eines Endes des Rollenelementes (7) aufweist,
**dadurch gekennzeichnet,**
**dass** eine Länge (a) zwischen der ersten Anlageschulter (19) und einem gegenüberliegenden Halteelement (18) im Wesentlichen der Länge des Rollenelementes (7) entspricht.

2. Lageranordnung nach Anspruch 1,
**dadurch gekennzeichnet,**
**dass** die erste Anlageschulter (19) das Achsenelement (15) in zumindest einen ersten Durchmesserabschnitt (15A) und einen zweiten Durchmesserabschnitt (15B) unterteilt, wobei der Durchmesser des ersten Durchmesserabschnittes (15A) größer als der Durchmesser des zweiten Durchmesserabschnittes (15B) ist.

3. Lageranordnung nach Anspruch 2,
**dadurch gekennzeichnet,**
**dass** das Achsenelement (15) im Bereich seines ersten Durchmesserabschnitts (15A) an dem ersten Halteelement (17) gelagert ist.

4. Lageranordnung nach Anspruch 3,
**dadurch gekennzeichnet,**
**dass** die Lagerung des ersten Durchmesserabschnitts (15A) des Achsenelementes (15) an dem ersten Halteelement (17) als Presspassung ausgebildet ist.

5. Lageranordnung nach Anspruch 3,
**dadurch gekennzeichnet,**
**dass** die Lagerung des ersten Durchmesserabschnitts (15A) des Achsenelementes (15) an dem ersten Halteelement (17) mit einem vorbestimmten Radialspiel ausgebildet ist.

6. Lageranordnung nach einem der Ansprüche 2 bis 5,
**dadurch gekennzeichnet,**
**dass** an dem Achsenelement (15) eine zweite Anlageschulter (20) zur Anlage an dem zweiten Halteelement (18) ausgebildet ist.

7. Lageranordnung nach Anspruch 6,
**dadurch gekennzeichnet,**
**dass** die zweite Anlageschulter (20) des Achsenelements (15) einen Übergang zwischen dem zweiten Durchmesserabschnitt (15B) und einem sich in axialer Richtung an diesen anschließenden dritten Durchmesserabschnitt (15C) bildet.

8. Lageranordnung nach Anspruch 7,
**dadurch gekennzeichnet,**
**dass** der Durchmesser des dritten Durchmesserabschnittes (15C) geringerer als der Durchmesser des zweiten Durchmesserabschnittes (15B) ist.

9. Lageranordnung nach Anspruch 7 oder 8,
**dadurch gekennzeichnet,**
**dass** das Achsenelement (15) im Bereich seines dritten Durchmesserabschnitts (15C) an dem zweiten Halteelement (18) gelagert ist.

10. Lageranordnung nach einem der vorangehenden Ansprüche,
**dadurch gekennzeichnet,**
**dass** das Achsenelement (15) ein Nietschaft eines Niets (16) ist, dessen Nietkopf (21) an der dem Rollenelement (7) abgewandten Seite des zugeordneten Halteelements (18) ausgebildet ist.

11. Lageranordnung nach einem der vorangehenden Ansprüche,
**dadurch gekennzeichnet,**
**dass** als Halteelemente (17, 18) jeweils Trägerbleche vorgesehen sind, welche als an einem Karosserierahmenelement (4) befestigte Bestandteile der Verschlussvorrichtung (3) eines Verdecks (1) eines Cabriolet-Fahrzeuges (2) ausgebildet sind.

## Claims

1. A bearing assembly for at least one roller element (7), in particular for at least one mating lock element of a locking device (3) for locking a convertible top (1) of a convertible motor vehicle (2) on a body framework element (4), said roller element (7) being rotatably supported on an axle element (15) between at least two holding elements (17, 18), and said axle element (15) being axially supported in a defined manner on the holding elements (17, 18) and comprising at least a first contact shoulder (19) between the holding elements (17, 18) for contact with one end of the roller element (7),
**characterized in that**
a length (a) between the first contact should (19) and an opposite holding element (18) corresponds substantially to the length of the roller element (7).

2. Bearing assembly according to claim 1,
**characterized in that**
the first contact shoulder (19) divides the axle element (15) into at least a first diameter portion (15A) and a second diameter portion (15B), the diameter of the first diameter portion (15A) being greater than the diameter of the second diameter portion (15B).

3. Bearing assembly according to claim 2,
**characterized in that**
the axle element (15) is supported on the first holding element (17) in the region of the first diameter portion (15A) of said axle element (15).

4. Bearing assembly according to claim 3,
**characterized in that**
the support of the first diameter portion (15A) of the axle element (15) on the first holding element (17) is provided as a press fit.

5. Bearing assembly according to claim 3,
**characterized in that**
the support of the first diameter portion (15A) of the axle element (15) on the first holding element (17) is provided with a predetermined radial clearance.

6. Bearing assembly according to any one of claims 2 to 5,
**characterized in that**
a second contact shoulder (20) for contact with the second holding element (18) is provided on the axle element (15).

7. Bearing assembly according to claim 6,
**characterized in that**
the second contact shoulder (20) of the axle element (15) forms a passage between the second diameter portion (15B) and a third diameter portion (15C) axially adjoining the second diameter portion (15B).

8. Bearing assembly according to claim 7,
**characterized in that**
the diameter of the third diameter portion (15C) is smaller than the diameter of the second diameter portion (15B).

9. Bearing assembly according to claim 7 or 8,
**characterized in that**
the axle element (15) is supported on the second holding element (18) in the region of the third diameter portion (15C) of said axle element (15).

10. Bearing assembly according to any one of the preceding claims,
**characterized in that**
the axle element (15) is a rivet shaft of a rivet (16) whose rivet head (21) is formed on the side of the associated holding element (18) facing away from the roller element (7).

11. Bearing assembly according to any one of the preceding claims,
**characterized in that**
support plates are provided as the respective holding elements (17, 18), said support plates being provided as components of the locking device (3) of a convertible top (1) of a convertible vehicle (2) which are mounted to a body framework element (4).

## Revendications

1. Dispositif de palier pour au moins un élément de roulement (7), notamment pour au moins un élément antagoniste de verrouillage d'un dispositif de verrouillage (3) destiné à verrouiller une capote (1) d'un cabriolet (2) sur un élément (4) du cadre de carrosserie, ledit élément de roulement (7) étant positionné de manière rotative sur un élément d'axe (15) entre au moins deux éléments de retenue (17, 18), et ledit élément d'axe (15) prenant appui, d'une manière axialement définie, contre les éléments de retenue (17, 18) et comprenant au moins un premier épaulement d'appui (19) entre les éléments de retenue (17, 18) qui est destiné pour l'appui contre une extrémité dudit élément de roulement (7),
**caractérisé en ce**
**qu'**une longueur (a) entre le premier épaulement d'appui (19) et un élément de retenue (18) opposé correspond généralement à la longueur dudit élément de roulement (7).

2. Dispositif de palier selon la revendication 1,
**caractérisé en ce que**
le premier épaulement d'appui (19) divise ledit élément d'axe (15) en au moins une première section de diamètre (15A) et une deuxième section de diamètre (15B), le diamètre de la première section de diamètre (15A) étant supérieur au diamètre de la deuxième section de diamètre (15B).

3. Dispositif de palier selon la revendication 2,
**caractérisé en ce que**
l'élément d'axe (15) est positionné sur le premier élément de retenue (17) dans la région de la première section de diamètre (15A) dudit élément d'axe (15).

4. Dispositif de palier selon la revendication 3,
**caractérisé en ce que**
le positionnement de la première section de diamètre (15A) de l'élément d'axe (15) sur le premier élément de retenue (17) est réalisé par ajustement serré.

5. Dispositif de palier selon la revendication 3,
**caractérisé en ce que**
le positionnement de la première section de diamètre (15A) de l'élément d'axe (15) sur le premier élément de retenue (17) est réalisé avec un jeu radial déterminé au préalable.

6. Dispositif de palier selon l'une quelconque des revendications 2 à 5,
**caractérisé en ce**
**qu'**un deuxième épaulement d'appui (20) destiné à prendre appui contre le deuxième élément de retenue (18) est prévu sur l'élément d'axe (15).

7. Dispositif de palier selon la revendication 6,
**caractérisé en ce que**
le deuxième épaulement d'appui (20) de l'élément d'axe (15) constitue un passage entre la deuxième section de diamètre (15B) et une troisième section de diamètre (15C) succédant à la deuxième section de diamètre (15B) en direction axiale.

8. Dispositif de palier selon la revendication 7,
**caractérisé en ce que**
le diamètre de la troisième section de diamètre (15C) est inférieur au diamètre de la deuxième section de diamètre (15B).

9. Dispositif de palier selon la revendication 7 ou 8,
**caractérisé en ce que**
l'élément d'axe (15) est positionné sur le deuxième élément de retenue (18) dans la région de la troisième section de diamètre (15C) de l'élément d'axe (15).

10. Dispositif de palier selon l'une quelconque des revendications précédentes,
**caractérisé en ce que**
l'élément d'axe (15) est une tige d'un rivet (16) dont la tête (21) est réalisée sur l'élément de retenue (18) respectif, sur la face de ce dernier détournée de l'élément de roulement (7).

11. Dispositif de palier selon l'une quelconque des revendications précédentes,
**caractérisé en ce que**
des tôles porteuses sont prévues en tant qu'éléments de retenue (17, 18) respectifs, lesdites tôles porteuses étant réalisées comme composants du dispositif de verrouillage (3) d'une capote (1) d'un cabriolet (2) qui sont fixés à un élément (4) du cadre de carrosserie.
